# EUROPEAN PATENT APPLICATION

(11) **EP 4 645 680 A1**
(43) Date of publication of application: **05.11.2025**
(21) Application number: 22970007.5
(22) Date of filing: 27.12.2022
(51) Int. Cl.: H02P 25/22, H02K 5/00

(54) **ELECTRONIC CONTROL DEVICE AND ELECTRIC POWER STEERING DEVICE**

(71) Applicant: Mitsubishi Electric Mobility Corporation, Tokyo 100-8310 (JP)
(72) Inventor: NAGAO, Takashi, Tokyo 100-8310 (JP); SAITO, Masatoshi, Tokyo 100-8310 (JP); UNEME, Yutaka, Tokyo 100-8310 (JP); FUJIKI, Hiroyuki, Tokyo 100-8310 (JP); ARAKI, Rei, Tokyo 100-8310 (JP)
(74) Representative: Hoffmann Eitle
(86) International application number: PCT/JP2022/048100
(87) International publication number: WO 2024/142213

(57) **Abstract**

An electronic control device according to the present disclosure includes a wiring board, a first semiconductor package that has an upper arm side switching element and a first sealing member, a second semiconductor package that has a lower arm side switching element and a second sealing member, a third semiconductor package that has a motor relay switching element and a third sealing member, and a CPU. The first semiconductor package, the second semiconductor package, and the third semiconductor package are implemented on the first surface of the wiring board. The upper arm side switching element, the lower arm side switching element, and the motor relay switching element form an inverter circuit that is capable of supplying current to the motor. In a plan view seen from a thickness direction of the wiring board, an area of the first semiconductor package is smaller than an area of the third semiconductor package, and an area of the second semiconductor package is smaller than the area of the third semiconductor package.

## Description

### Technical Field

The present invention relates to an electronic control device and an electric power steering device.

### Background Art

In Patent Document 1, a distribution wiring of a board used in an electronic control device that controls a motor is disclosed. In order to supply power to a motor, a plurality of switching elements and control elements or the like are implemented on the wiring board.

### Citation List

### Patent Documents

Patent Document 1:
Japanese Unexamined Patent Application, First Publication No. 2020-4887

### Summary of Invention

### Problem to be Solved by the Invention

Since multiple switching elements are used in in an electronic control device, a proportion of implementation area of the switching elements out of the entire area on a wiring board is large. A size of the wiring board increases as the implementation area of the switching elements increases. So by causing the implementation area to decrease, there is room for improvement in terms of downsizing the wiring board.

The present invention is made with the above problem in mind, and an object thereof is to provide an electronic control device and an electric power steering device capable of having a downsized wiring board.

### Means to Solve the Problem

An embodiment of an electronic control device according to the present disclosure includes a wiring board that has a first surface, and a second surface that is on an opposite side to the first surface, a first semiconductor package that has an upper arm side switching element, and a first sealing member that surrounds the upper arm side switching element, a second semiconductor package that has a lower arm side switching element, and a second sealing member that surrounds the lower arm side switching element, a third semiconductor package that has a motor relay switching element, and a third sealing member that surrounds the motor relay switching element, and a CPU that controls the upper arm side switching element, the lower arm side switching element, and the motor relay switching element. The first semiconductor package, the second semiconductor package, and the third semiconductor package are implemented on the first surface of the wiring board. The upper arm side switching element, the lower arm side switching element, and the motor relay switching element form an inverter circuit that is capable of supplying current to the motor. In a plan view seen from a thickness direction of the wiring board, an area of the first semiconductor package is smaller than an area of the third semiconductor package, and an area of the second semiconductor package is smaller than the area of the third semiconductor package.

An embodiment of an electric power steering device according to the present disclosure includes the aforementioned electronic control device, and the motor that is controlled by the electronic control device.

### Effects of the Invention

According to the previous disclosure, it is possible to provide an electronic control device and an electric power steering device having a downsized wiring board.

### Brief Description of Drawings

[FIG. 1] A circuit diagram of an electronic control device and an electric power steering device according to a first embodiment.
[FIG. 2] A cross-sectional view of a configuration of the electronic control device and an electric power steering device according to the first embodiment.
[FIG. 3] A plan view of a wiring board according to the first embodiment.
[FIG. 4] A cross-sectional view of a heat dissipation structure of a semiconductor package, according to the first embodiment.
[FIG. 5] A circuit diagram of the electronic control device and the electric power steering device according to a second embodiment.
[FIG. 6] A plan view of the wiring board according to the second embodiment.
[FIG. 7] A circuit diagram of the electronic control device and the electric power steering device according to a third embodiment.
[FIG. 8] A plan view of the wiring board according to the third embodiment.
[FIG. 9] A plan view of the wiring board according to a first modification example of the third embodiment.
[FIG. 10] A circuit diagram of the electronic control device and the electric power steering device according to a second modification example of the third embodiment.
[FIG. 11] A circuit diagram of the electronic control device and the electric power steering device according to a fourth embodiment.
[FIG. 12] A plan view of the wiring board according to the fourth embodiment.
[FIG. 13] A plan view of the wiring board according to a modification example of the fourth embodiment.

### Description of Embodiments

Hereinafter, embodiments of the present disclosure are explained with reference to the drawings. The technical scope of the present disclosure is not limited to the embodiments herein, and changes may be made within so long as changes thereof are within the technical scope thereof.

### First Embodiment

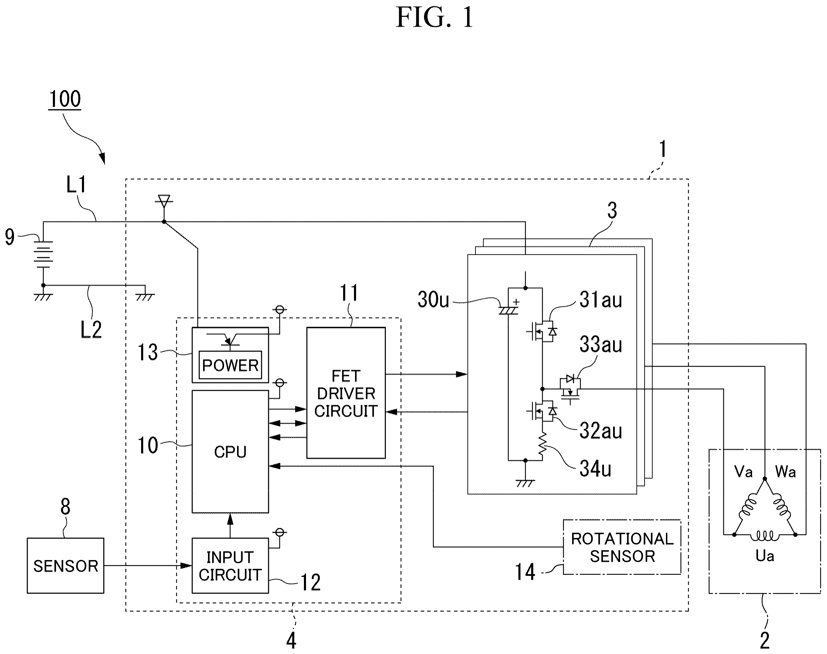

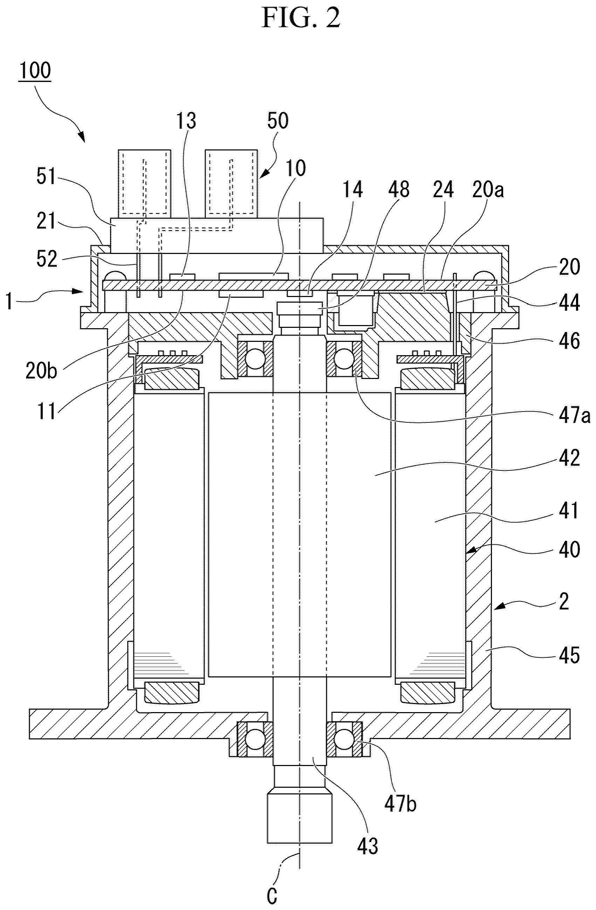

FIG. 1 is a circuit diagram of an electronic control device 1 and an electric power steering device 100 according to a first embodiment. FIG. 2 is a cross-sectional view of a configuration of the electronic control device 1 and the electric power steering device 100. As shown in FIG. 1, the electric power steering device 100 has the electronic control device 1 and a motor 2. The electric power steering device 100 is configured such that a torque which the motor 2 generates is used as a steering assist during vehicle steering. Although details are omitted, a rotating shaft 43 of the motor 2 is connected to a steering mechanism of the vehicle, via a reduction gear or the like. The electronic control device 1 controls the motor 2.

As shown in FIG. 1, the electronic control device 1 has an inverter circuit 3, a control circuit 4, a rotation sensor 14 or the like. The control circuit 4 includes a CPU10, a FET driver circuit 11, an input circuit 12, and a power supply circuit 13 or the like.

As shown in FIG. 2, the electronic control device 1 has a wiring board 20. The inverter circuit 3, the control circuit 4, and the rotation sensor 14 or the like are implemented on the wiring board 20. The wiring board 20 has a first surface 20a and a second surface 20b. The wiring board 20 is covered by a cover 21.

As shown in FIG. 2, the motor 2 includes a motor body 40, a frame 45, a housing 46, and a terminal group 44 or the like. As the motor 2 for example, it is possible to adopt a brushless DC motor. The motor 2 according to the present embodiment is a three phase brushless motor. Three phases here refers to a U phase, a V phase, and a W phase.

The motor body 40 includes a stator 41 and a rotor 42. The stator 41 has three phase windings (three phase coils). In FIG. 1, the three phase windings are shown with reference signs Ua, Va, and Wa. Windings Ua, Va, and Wa are delta connected. The windings Ua, Va, and Wa may be star connected. The rotor 42 has the rotating shaft 43. The rotating shaft 43 rotates around the stator 41, with a motor axis C as a center thereof.

### (Direction Definition)

In the present specification, a direction along the motor axis C is referred to as an "axial direction". The axial direction matches a thickness direction of a wiring board 20. As shown in FIG. 2, the wiring board 20 and the rotor 42 are aligned and disposed in the axial direction. A side in which the wiring board 20 is disposed is referred to as "above", and a side in which the rotor 42 is disposed is referred to as a "below", in the axial direction. The wiring board 20 extends so as to intersect the axial direction (substantially orthogonal). A first surface 20a is a surface that faces above, and a second surface 20b is a surface that faces below, in the wiring board 20. In other words, the first surface 20a faces the cover 21 side, and the second surface 20b faces the rotor 42 side. A view seen from the axial direction is referred to as a "plan view". The axial direction need not match the vertical direction.

As shown in FIG. 2, the frame 45 is a cylindrical shape. The motor main body 40 is housed on an inside of the frame 45. A through hole is formed on a center of a bottom of the frame 45, and a bottom bearing 47b is fixed to an inside of said through hole. A bottom end of the rotating shaft 43 is inserted through the bottom bearing 47b.

The housing 46 is provided above the motor 2. The housing 46 is fitted on an inside of a top end of the cylindrical shape frame 45. The housing 46 prevents foreign objects from entering inside of the motor 2. A through hole is formed on center of the housing 46, and a top bearing 47a is fixed to an inside of said through hole. A top end of the rotating shaft 43 is inserted into the top bearing 47a.

The top bearing 47a and the bottom bearing 47b hold the rotating shaft 43 such that the rotating shaft 43 is able to smoothly rotate.

A sensor magnet 48 is attached to the top end of the rotating shaft 43. The sensor magnet 48 has a number of N poles and S poles that are at least greater than or equal to one.

As shown in FIG. 2, the wiring board 20 is disposed above the housing 46. The stator 41 (three phase windings Ua, Va, and Wa) is disposed below the housing 46. A terminal group 44 is electrically connected to the three phase windings Ua, Va, and Wa of the wiring board 20. Specifically, the housing 46 has a through hole that extends in the axial direction. The terminal group 44 is inserted through the through hole of the housing 46. Three terminals that correspond to each of the three phase windings Ua, Va, and Wa are included in the terminal group 44.

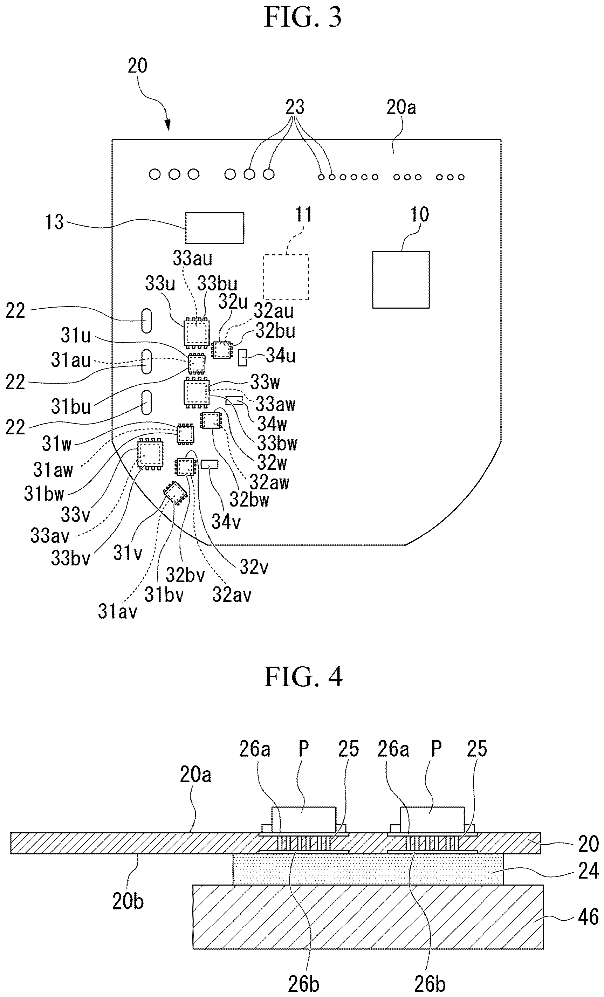

As shown in FIG. 3, three current supply holes 22 are provided on the wiring board 20. The three terminals that are included in the terminal group 44 are each inserted through said three holes current supply holes 22. Current is supplied to the three phase windings Ua, Va, and Wa from the inverter circuit 3 of the wiring board 20, via the current supply holes 22 and the terminal group 44. Accordingly, the rotating shaft 43 rotates. The three terminals that are included in the terminal group 44 may be terminals of the three phase windings Ua, Va, and Wa, or may be intermediate parts that are electrically connected to the three phase windings Ua, Va, and Wa.

The rotation sensor 14 detects a rotation angle of the rotating shaft 43. It is possible to use an MR (magnetoresistance: Magnetoresistance) sensor as the rotation sensor 14. The rotation sensor 14 detects a rotation angle of the rotating shaft 43 by detecting a magnetic field that the sensor magnet 48 generates. The rotation sensor 14 is disposed so as to face the sensor magnet 48. More specifically, as shown in FIG. 2, the rotation sensor 14 is implemented on the second surface 20b of the wiring board 20. In a plan view, the rotation sensor 14 is disposed in a position that overlaps with the sensor magnet 48. By disposing in said position, it is possible to increase detection accuracy using the rotation sensor 14 of the rotation angle, and it is possible to increase controllability of the motor 2 using the electronic control device 1. However, if a desired detection accuracy is obtainable, the rotation sensor 14 may be disposed on the first surface 20a of the wiring board 20. The rotation sensor 14 may also be disposed in a position that misaligns with the sensor magnet 48 in the plan view.

As shown in FIG. 2, a connector assembly 50 is disposed above the cover 21. The connector assembly 50 is a one-piece molding part that has a connector, a metallic bus bar and terminals or the like, and that has a holding member 51 which holds said components. The holding member 51 may for example, be made of resin. The connector assembly 50 connects a power supply line L1 and a ground line L2 needed for control of the motor 2 and for drive of the motor 2 to the wiring board 20. The connector assembly 50 connects a signal transmission line that transmits a transmission signal, which conveys a torque sensor signal and a vehicle transmission signal or the like to the wiring board 20. The connector assembly 50 may electrically connect the power supply line L1, the ground line L2, and the signal transmission line or the like all together to the electronic control device 1. A connector separate from the connector assembly 50 may also be provided for connecting the power supply line L1 and the ground line L2 or the like.

The connector assembly 50 has a plurality of connector terminals 52 that extend below from the holding member 51. The plurality of connector terminals 52 are each inserted through a plurality of connector through holes 23 (refer to FIG. 3), which are formed on the wiring board 20. Each of the connector terminals 52 is electrically connected to a circuit pattern that is formed on the wiring board 20.

The wiring board 20 is attached to the housing 46 using threads or the like. The wiring board 20 may be attached to the cover 21 or the connector assembly 50 or the like.

Next, an outline of operations of each part of the electronic control device 1 is explained.

A power supply circuit 13 generates a power supply current so as to cause each electronic component (a CPU 10, a FET driver circuit 11, an input circuit 12, the rotation sensor 14) that configures the electronic control device 1 to operate normally, using power supplied from a battery 9 (power supply).

The input circuit 12 inputs various information received by the electronic control device 1 from sensors 8 and the rotation sensor 14 to the CPU 10. Although details are omitted from the drawings, the input circuit 12 includes a torque sensor interface circuit and a vehicle transmission interface circuit. The torque sensor interface is a circuit for detecting steering torque of a vehicle operator in the electric power steering device 100, and for obtaining steering torque information. The vehicle transmission interface circuit is a circuit for receiving various information from a vehicle system.

The CPU 10 calculates a control amount for supplying power to the motor 2, based on various information or the like that is input from the input circuit 12. The FET driver circuit 11 drives the inverter circuit 3 based on calculation results of the CPU 10.

The inverter circuit 3 supplies power to the three phase windings Ua, Va, and Wa of the motor 2 based on the calculation results of the CPU 10. The inverter circuit 3 has three upper arms and three lower arms that correspond to each of the U phase, the V phase, and the W phase. Each of the U phase, the V phase, and the W phase in the inverter circuit 3 has the same circuit configuration. Therefore, in the explanations that follow, the U phase represents all three phases. In other words, the same explanation is equally applicable to the V phase and the W phase. Out of configuration components of the inverter circuit 3, configuration components corresponding to the U phase are shown in FIG. 1. In reality however, the inverter circuit 3 has configuration components corresponding to the V phase and the W phase. In other words, in FIG. 1, configuration components of the V phase and the W phase which the inverter circuit 3 has are omitted.

As shown in FIG. 1, the inverter circuit 3 has a smoothing capacitor 30u, an upper arm side switching element 31au, a lower arm side switching element 32au, a motor relay switching element 33au, and a shunt resistor 34u. The upper arm side switching element 31au is disposed on the upper arm, and the lower arm side switching element 32au is disposed on the lower arm. The upper arm side switching element 31au is electrically connected to the positive pole of the battery 9, and the lower arm side switching element 32au is electrically connected to the negative pole of the battery 9. The upper arm side switching element 31au and the lower arm side switching element 32au are connected in series. The motor relay switching element 33au is connected between the upper arm side switching element 31au and the lower arm side switching element 32au. The motor relay switching element 33au has a function of a relay. In other words, the motor relay switching element 33au changes an ON/OFF of a power supply towards the windings Ua of the motor 2 from a portion between the upper arm side switching element 31au and the lower arm side switching element 32au. The upper arm side switching element 31au and the lower arm side switching element 32au are caused to operate by the FET driver circuit 11, based on the calculation results of the CPU 10. An FET (Field Effect Transistor; Field Effect Transistor) may be adopted as an example of the upper arm side switching element 31au, the lower arm side switching element 32au, and the motor relay switching element 33au, is adoptable.

The smoothing capacitor 30u is connected to the vicinity of the upper arm side switching element 31au and the lower arm side switching element 32au. The smoothing capacitor 30u has a function of suppressing changes in the power supply current during switching, and suppressing noise. The shunt resistor 34u is connected between the lower arm side switching element 32au and the ground. The shunt resistor 34u is used to detect a drive current that flows in the winding Ua of the motor 2.

The inverter circuit 3 may have a choke coil that suppress noise which is emitted to the outside of the electronic control device 1, and that suppresses a flow of noise to an inside of the electronic control device 1.

Next, dispositions of the various components of the electronic control device 1 are explained.

FIG. 3 is a plan view of an outline of a shape of the wiring board 20 and dispositions of parts implemented on the wiring board 20. FIG. 3 is a view seen from the first surface 20a side of the wiring board 20. Parts that are implemented on the first surface 20a are shown with a solid line, and parts that are implemented on the second surface 20b are shown with a dashed line.

As shown in FIG. 3, the CPU 10 and the power supply circuit 13 are implemented on the first surface 20a of the wiring board 20. The FET driver circuit 11 is implemented on the second surface 20b of the wiring board 20. The CPU 10 may be implemented on the second surface 20b.

Three first semiconductor packages 31u, 31v, 31w, three second semiconductor packages 32u, 32v, 32w, and three third semiconductor packages 33u, 33v, 33w which correspond to each of the U phase, V phase, and the W phase are implemented on the first surface 20a of the wiring board 20. The three first semiconductor packages 31u, 31v, 31w have the same configuration. The three second semiconductor packages 32u, 32v, 32w have the same configuration. The three third semiconductor packages 33u, 33v, 33w have the same configuration. From here on, only the U phase is explained as a representative of the aforementioned three phases. In other words, the same explanation below is equally applicable to the V phase and the W phase.

The first semiconductor package 31u has the upper arm side switching element 31au, and a first sealing member 31bu which surrounds the upper arm side switching element 31au. An outer appearance of the first semiconductor package 31u (first sealing member 31bu) in the plan view is a long rectangular shape. The first sealing member 31bu is for example, made from resin. The second semiconductor package 32u has the lower arm side switching element 32au, and a second sealing member 32bu which surrounds the lower arm side switching element 32au. An outer appearance of the second semiconductor package 32u (second sealing member 32bu) in the plan view is a long rectangular shape. The second sealing member 32bu is for example, made from resin. The third semiconductor package 33u has the motor relay switching element 33au, and a third sealing member 33bu which surrounds the motor relay switching element 33au. An outer appearance of the third semiconductor package 33u (third sealing member 33bu) in the plan view is a long rectangular shape. The third semiconductor package 33u is for example, made from resin.

In the plan view, an area of the first semiconductor package 31u is smaller than an area of the third semiconductor package 33u, and an area of the second semiconductor package 32u is smaller than the area of the third semiconductor package 33u. In the plan view, the area of the first semiconductor package 31u is the same area of the second semiconductor package 32u. Similarly in the plan view of the V phase, an area of the first semiconductor package 31v is smaller than the area of the third semiconductor package 33v, and an area of the second semiconductor package 32v is smaller than the area of the third semiconductor package 33v. In the plan view, the area of the first semiconductor package 31v is the same as an area of the second semiconductor package 32v. Similarly with the W phase, in the plan view, an area of the first semiconductor package 31w is smaller than an area of the third semiconductor package 33w, and an area of the second semiconductor package 32w is smaller than the area of the third semiconductor package 33w. In the plan view an area of the first semiconductor package 31w is the same as an area of the second semiconductor package 32w.

According to the above construction, compared to a case where the areas of the first semiconductor packages 31u, 31v, 31w and the second semiconductor packages 32u, 32v, 32w are the same as the areas of the third semiconductor packages 33u, 33v, 33w, it is possible to reduce implementation areas of the switching elements 31au, 31av, 31aw, 32au, 32av, 32aw, 33au, 33av, 33aw in the wiring board 20.

Three shunt resistors 34u, 34v, and 34w that correspond to each of the U phase, the V phase, and the W phase are implemented on the first surface 20a of the wiring board 20. The three shunt resistors 34u, 34v, and 34w have the same configuration.

Here, the upper arm side switching elements 31au, 31av, 31aw, the lower arm side switching elements 32au, 32av, 32aw, the motor relay switching elements 33au, 33av, 33aw, and the smoothing capacitors 30u, 30v, 30w or the like are heat generating elements that pass a large current therethrough, and generate heat. It is preferable to allow heat that is generated at said heat generating elements to escape to an outside of the electric power steering device 100.

Hereinafter, the first semiconductor packages 31u, 31v, 31w, the second semiconductor packages 32u, 32v, 32w, and the third semiconductor packages 33u, 33v, 33w are collectively referred to as a "semiconductor package P". As shown in FIG. 4, the electric power steering device 100 according to the first embodiment has heat dissipation construction in which the heat generated by each of the semiconductor packages P is dissipated to the housing 46. More specifically, the housing 46 is disposed so as to face the second surface 20b of the wiring board 20. A gap in the axial direction is formed between the wiring board 20 and the housing 46, and a thermal connection member 24 is provided therebetween. The thermal connection member 24 is thermally connected to the wiring board 20 and the housing 46. The thermal connection member 24 has high insulation, as well as high thermal conductivity. The thermal connection member 24 is for example, a heat dissipating grease. By providing the thermal connection member 24, it is possible to efficiently transmit heat that is generated by the various semiconductor packages P to the housing 46 via the thermal connection member 24.

In the wiring board 20, a metallic thermal conductive member 25 that is disposed so as to penetrate from the first surface 20a to the second surface 20b is provided. In the example of FIG. 4, the thermal conductive member 25 is a thermal via. The thermal conductive member 25 may also be a copper inlay. An upper heat dissipating pattern 26a is formed on the first surface 20a of the wiring board 20. A lower heat dissipating pattern 26b is formed on the second surface 20b of the wiring board 20. An upper end of the thermal conductive member 25 is connected to the upper heat dissipating pattern 26a, and a lower end thereof is connected to the lower heat dissipating pattern 26b. The thermal conductive member 25 is thermally connected to the semiconductor package P via the upper heat dissipating pattern 26a. The thermal conductive member 25 is thermally connected to the thermal connection member 24 via the lower heat dissipating pattern 26b. In the aforementioned construction, it is possible for the semiconductor package P to transmit heat to the lower heat dissipating pattern 26b via the upper heat dissipating pattern 26a and the thermal conductive member 25. Furthermore, it is possible to transmit heat from the lower heat dissipating pattern 26b to the housing 46 via the thermal connection member 24.

As in the aforementioned, in the plan view, the areas of the first semiconductor packages 31u, 31v, 31w are smaller than the areas of the third semiconductor packages 33u, 33v, 33w, and the areas of the second semiconductor packages 32u, 32v, 32w are smaller than the areas of the third semiconductor packages 33u, 33v, 33w. Therefore, heat dissipation of the first semiconductor packages 31u, 31v, 31w and the second semiconductor packages 32u, 32v, 32w is less than heat dissipation of the third semiconductor packages 33u, 33v, 33w.

With the U phase used as an example, an amount of heat generation at the upper arm side switching elements 31au, 31av, 31aw, the lower arm side switching elements 32au, 32av, 32aw, and the motor relay switching elements 33au, 33av, 33aw is explained. The explanation below is equally applicable to the V phase and the W phase. As for PWM drive operation of the motor 2, in a case where the upper arm side switching element 31au is ON, current flows from the power supply line L1 in a path of the upper arm side switching element 31au, the motor relay switching element 33au, the motor 2, and arms of other phases. In a case where the lower arm side switching element 32au is ON, current flows from the ground line L2 in a path of the shunt resistor 34u, the lower arm side switching element 32au, the third semiconductor package 33u, the motor 2, and arms of other phases. In other words, at around one cycle of the PWM drive of the motor 2, the amount of time the current flows within the upper arm side switching element 31au and the lower arm side switching element 32au is shorter than the amount of time the current flows within motor relay switching element 33au. Therefore, the amount of generated heat in each of the switching elements of the upper arm side switching element 31au and the lower arm side switching element 32au is smaller than the amount of heat generated by the switching elements of the motor relay switching element 33au.

From the above, by having the areas of the first semiconductor packages 31u, 31v, 31w and the second semiconductor packages 32u, 32v, 32w be smaller than the areas of the third semiconductor packages 33u, 33v, 33w, a balance of heat generation and heat dissipation of each of the semiconductor packages is preserved, and it is possible to uniformly suppress a rise in temperature of the first semiconductor packages 31u, 31v, 31w, the second semiconductor packages 32u, 32v, 32w, and the third semiconductor packages 33u, 33v, 33w. In other words, it is possible to prevent localized heat concentration in the electronic control device 1, and it is possible to uniformly suppress a rise in temperature of each part of the electronic control device 1. Therefore, it is possible to suppress performance degradation of the electric power steering device 100, and it is possible to increase drive capacity of the electric power steering device 100.

As explained above, the electronic control device 1 according to the present embodiment includes the wiring board 20, the first semiconductor packages 31u, 31v, 31w, the second semiconductor packages 32u, 32v, 32w, the third semiconductor packages 33u, 33v, 33w, and the CPU 10. The first semiconductor packages 31u, 31v, 31w have the upper arm side switching elements 31au, 31av, 31aw, and the first sealing members 31bu, 31bv, 31bw that surround the upper arm side switching elements 31au, 31av, and 31aw. The second semiconductor packages 32u, 32v, 32w have the lower arm side switching elements 32au, 32av, 32aw, and the second sealing members 32bu, 32bv, 32bw that surround the lower arm side switching elements 32au, 32av, and 32aw. The third semiconductor packages 33u, 33v, 33w have the motor relay switching elements 33au, 33av, 33aw, and the third sealing members 33bu, 33bv, 33bw that surround the third semiconductor packages 33u, 33v, and 33w. The CPU10 controls the upper arm side switching elements 31au, 31av, 31aw, the lower arm side switching elements 32au, 32av, 32aw, and the motor relay switching elements 33au, 33av, and 33aw. The first semiconductor packages 31u, 31v, 31w, the second semiconductor packages 32u, 32v, 32w, and the third semiconductor packages 33u, 33v, 33w are implemented on the first surface 20a of the wiring board 20. The upper arm side switching elements 31au, 31av, 31aw, the lower arm side switching elements 32au, 32av, 32aw, and the motor relay switching elements 33au, 33av, and 33aw form the inverter circuit 3, which is capable of supplying current to the motor 2. In a plan view seen from a thickness direction of the wiring board 20, the areas of the first semiconductor packages 31u, 31v, 31w are smaller than the areas of the third semiconductor packages 33u, 33v, 33w, and the areas of the second semiconductor packages 32u, 32v, 32w are smaller than the areas of the third semiconductor packages 33u, 33v, and 33w.

The electric power steering device 100 according to the present disclosure includes the electronic control device 1, and the motor 2 which is controlled by the electronic control device 1.

With the above configuration, it is possible to reduce the implementation areas of the switching elements 31au, 31av, 31aw, 32au, 32av, 32aw, 33au, 33av, and 33aw, and it is possible to make the wiring board 20 smaller.

The motor 2 has the motor main body 40, the cylindrical shape frame 45 that houses the motor main body 40, and the housing 46 that is fitted to the frame 45. The housing 46 is disposed so as to face the second surface 20b of the wiring board 20. The thermal connection member 24 is provided between the housing 46 and the wiring board 20, and thermally connects the housing 46 and the wiring board 20. The thermal conductive member 25, which is disposed so as to penetrate from the first surface 20a to the second surface 20b, and is thermally connected to the thermal connection member 24, is provided in the wiring board 20.

From the above, it is possible to dissipate heat that is generated by the first semiconductor packages 31u, 31v, 31w, the second semiconductor packages 32u, 32v, 32w, and the third semiconductor packages 33u, 33v, 33w that are implemented on the first surface 20a of the wiring board 20 to the housing 46, via the thermal conductive member 25 and the thermal connection member 24.

### Second Embodiment

Next, an electric power steering device according to a second embodiment is explained. A configuration of the electric power steering device according to the present embodiment is fundamentally the same as the electric power steering device explained in the first embodiment, and explanations hereon focus on differing aspects only.

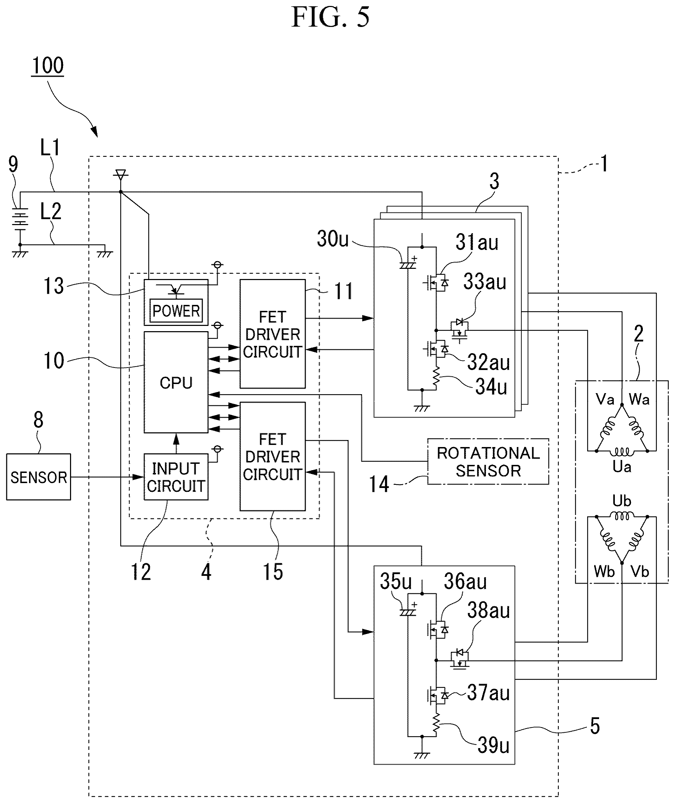

As shown in FIG. 5, the motor 2 in the present embodiment has two sets of three phase windings (three phase coils). Fundamentally, along with first three phase windings Ua, Va, Wa, the motor 2 has second three phase windings Ub, Vb, and Wb. The windings Ub, Vb, and Wb are delta connected. The windings Ub, Vb, and Wb may be star connected. The electronic control device 1 further includes a second inverter circuit 5 that supplies power to the second three phase windings Ub, Vb, and Wb, and a second FET driver circuit 15 that drives the second inverter circuit 5. In the example of FIG. 5, the inverter circuit 3 and the second inverter circuit 5 are commonly connected to the battery 9 and ground. However, the second inverter circuit 5 may be connected to a battery and ground of another system.

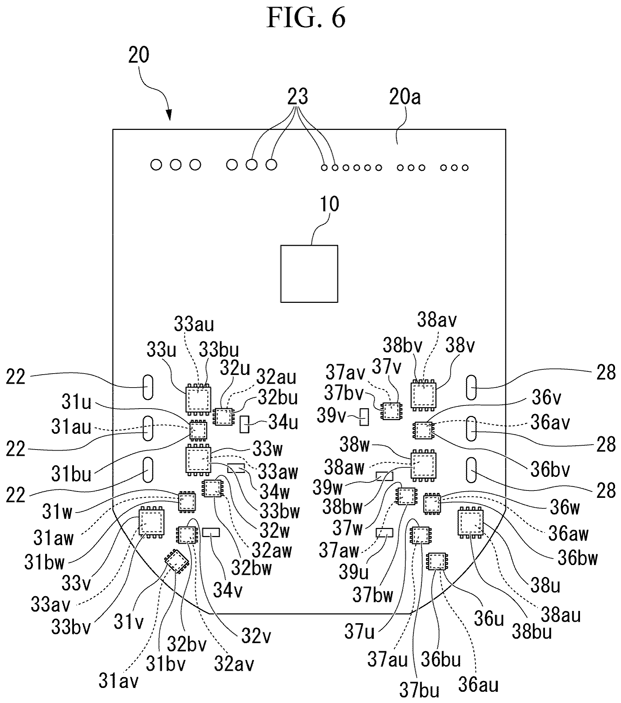

The terminal group 44 of the motor 2 has three second terminals that correspond to each of the second three phase windings Ub, Vb, and Wb, along with the three terminals that correspond to each of the first three phase windings Ua, Va, and Wa. As shown in FIG. 6, along with the three current supply holes 22, three second current supply holes 28 are formed on the wiring board 20. Each of the three second terminals that are included in the terminal group 44 are each inserted through said three second current supply holes 28. Current is supplied from the inverter circuit 3 to the three phase windings Ua, Va, Wa via the current supply holes 22 and the terminal group 44, and the second inverter circuit 5 to the second three phase windings Ub, Vb, Wb via the second current supply holes 28 and the terminal group 44.

A circuit configuration of the second inverter circuit 5 is the same circuit configuration as that of the inverter circuit 3. In other words, the second inverter circuit 5 has three upper arms and three lower arms that correspond to each of the U phase, the V phase, and the W phase. The circuit configuration in each of the U phase, the V phase, and the W phase are the same in the second inverter circuit 5. From here on, only the U phase is explained as a representative of the aforementioned phases. The second inverter circuit 5 has a second smoothing capacitor 35u, a second upper arm side switching element 36au, a second lower arm side switching element 37au, a second motor relay switching element 38au, and a second shunt resistor 39u. The second upper arm side switching element 36au is disposed on the upper arm, and the second lower arm side switching element 37au is disposed on the lower arm. The second upper arm side switching element 36au is electrically connected to the positive pole of the battery 9, and the second lower arm side switching element 37au is connected to the negative pole of the battery 9. The second upper arm side switching element 36au and the second lower arm side switching element 37au are connected in series. The second motor relay switching element 38au is connected between the second upper arm side switching element 36au and the second lower arm side switching element 37au. The second motor relay switching element 38au has a relay function. In other words, the second motor relay switching element 38au switches an ON/OFF of the power supply directed towards the winding Ub of the motor 2, from a part between the second upper arm side switching element 36au and the second lower arm side switching element 37au. The second upper arm side switching element 36au and the second lower arm side switching element 37au are caused to operate by the second FET driver circuit 15, based on calculation results of the CPU 10. An FET (Field Effect Transistor; Field Effect Transistor) may be adopted as an example of the second upper arm side switching element 36au, the second lower arm side switching element 37au, and the second motor relay switching element 38au.

The second smoothing capacitor 35u is connected to a vicinity of the second upper arm side switching element 36au and the second lower arm side switching element 37au. The second smoothing capacitor 35u has a function of changing the power supply voltage and suppressing noise during switching. The second shunt resistor 39u is connected between the second lower arm side switching element 37au and ground. The second shunt resistor 39u is used to detect current drive that flows to the winding Ub of the motor 2.

The second inverter circuit 5 may have a choke coil that suppresses noise from flowing to the inside of the electronic control device 1, and suppresses noise from dissipating to the outside of the electronic control device 1.

As shown in FIG. 6, three fourth semiconductor packages 36u, 36v, 36w, three fifth semiconductor packages 37u, 37v, 37w, and three sixth semiconductor packages 38u, 38v, 38w that correspond to each phase of the U phase, the V phase, and the W phase are implemented on the first surface 20a of the wiring board 20. Three second shunt resistors 39u, 39v, and 39w that correspond to each phase of the U phase, the V phase, and the W phase are implemented on the first surface 20a of the wiring board 20.

The fourth semiconductor packages 36u, 36v, 36w have the same configuration as the first semiconductor packages 31u, 31v, and 31w. The fourth semiconductor package 36u (36v, 36w) has the second upper arm side switching element 36au (36av, 36aw), and a fourth sealing member 36bu (36bv, 36bw) that surrounds the second upper arm side switching element 36au (36av, 36aw). The fifth semiconductor packages 37u, 37v, 37w have the same configuration as the second semiconductor packages 32u, 32v, and 32w. The fifth semiconductor package 37u (37v, 37w) has the second lower arm side switching element 37au (37av, 37aw) and a fifth sealing member 37bu (37bv, 37bw) that surrounds the second lower arm side switching element 37au (37av, 37aw). The sixth semiconductor packages 38u, 38v, and 38u have the same configuration as the third semiconductor packages 33u, 33v, and 33w. The sixth semiconductor package 38u (38v, 38w) has the second motor relay switching element 38au (38av, 38aw), and a sixth sealing member 38bu (38bv, 38bw) that surrounds the second motor relay switching element 38au (38av, 38aw).

As seen from the plan view, an area of the fourth semiconductor package 36u (36v, 36w) is smaller than an area of the sixth semiconductor package 38u (38v, 38w) and an area of the fifth semiconductor package 37u (37v, 37w) is smaller than the area of the sixth semiconductor package 38u (38v, 38w). As seen in the plan view, the area of the fourth semiconductor package 36u (36v, 36w) is the same area of the fifth semiconductor package 37u (37v, 37w).

With the above construction, compared to a case where the areas of the fourth semiconductor packages 36u, 36v, 36w and the fifth semiconductor packages 37u, 37v, 37w are the same as the areas of the sixth semiconductor packages 38u, 38v, and 38w, it is possible to reduce implementation areas of the switching elements 36au, 36av, 36aw, 37au, 37av, 37aw, 38au, 38av, and 38aw on the wiring board 20.

In such case, heat dissipation of the fourth semiconductor packages 36u, 36v, 36w and the fifth semiconductor packages 37u, 37v, 37w becomes less than the heat dissipation of the sixth semiconductor packages 38u, 38v, and 38w. On the other hand, when current flows to each switching element around one cycle of the PWM drive of the motor 2, the second upper arm side switching element 36au (36av, 36aw) and the second lower arm side switching element 37au (37av, 37aw) become shorter than the second motor relay switching element 38au (38av, 38aw). Therefore, heat dissipation amounts of each of the switching elements for the second upper arm side switching element 36au (36av, 36aw) and the second lower arm side switching element 37au (37av, 37aw) become smaller than the heat dissipation amounts of the second motor relay switching element 38au (38av, 38aw).

From the above, by having the areas of the fourth semiconductor packages 36u, 36v, 36w and the fifth semiconductor packages 37u, 37v, 37w be smaller than the areas of the sixth semiconductor packages 38u, 38v, and 38w, a balance between the amount of heat generation and heat dissipation in each semiconductor package is preserved, and it is possible to uniformly suppress a rise in temperature of the fourth semiconductor packages 36u, 36v, 36w, the fifth semiconductor packages 37u, 37v, 37w, and the sixth semiconductor packages 38u, 38v, and 38w.

As explained above, in the present embodiment, the electronic control device 1 includes the fourth semiconductor packages 36u, 36v, 36w, the fifth semiconductor packages 37u, 37v, 37w, and the sixth semiconductor packages 38u, 38v, and 38w. The fourth semiconductor packages 36u, 36v, 36w has the second upper arm side switching elements 36au, 36av, 36aw, and the fourth sealing members 36bu, 36bv, 36bw that surround the second upper arm side switching elements 36au, 36av, and 36aw. The fifth semiconductor packages 37u, 37v, 37w has the second lower arm side switching elements 37au, 37av, 37aw, and the fifth sealing members 37bu, 37bv, 37bw that surround the second lower arm side switching elements 37au, 37av, and 37aw. The sixth semiconductor packages 38u, 38v, and 38w has the second motor relay switching elements 38au, 38av, 38aw, and the sixth sealing members 38bu, 38bv, 38bw that surround the second motor relay switching elements 38au, 38av, and 38aw. The fourth semiconductor packages 36u, 36v, 36w, the fifth semiconductor packages 37u, 37v, 37w, and the sixth semiconductor packages 38u, 38v, 38w are implemented on the first surface 20a of the wiring board 20. The second upper arm side switching elements 36au, 36av, 36aw, the second lower arm side switching elements 37au, 37av, 37aw, and the second motor relay switching elements 38au, 38av, 38aw form the second inverter circuit 5, which is different from the inverter circuit 3, and is capable of providing current to the motor 2. In the plan view, the areas of the fourth semiconductor packages 36u, 36v, 36w are smaller than the areas of the sixth semiconductor packages 38u, 38v, 38w, and the areas of the fifth semiconductor packages 37u, 37v, 37w are smaller than the areas of the sixth semiconductor packages 38u, 38v, and 38w.

Redundancy is insured by having the inverter circuit 3 and the second inverter circuit 5 be mutually configured to independently supply current to the motor 2. It is also possible to downsize the wiring board 20 by reducing implementation surfaces of the switching elements 36au, 36av, 36aw, 37au, 37av, 37aw, 38au, 38av, and 38aw on the wiring board 20.

### Third Embodiment

Next, an electric power steering device according to a third embodiment is explained. A configuration of the electric power steering device according to the present embodiment is fundamentally the same as the electric power steering device explained in the first embodiment, and explanations hereon focus on differing aspects only.

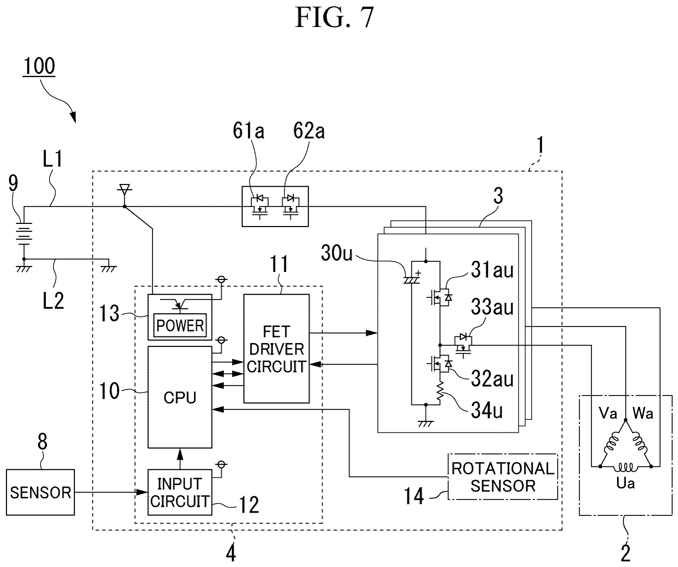

As shown in FIG. 7, the electronic control device 1 in the present embodiment also includes a power supply relay switching element 61a, and a reverse polarity protection relay switching element 62a.

The power supply relay switching element 61a switches between current supply and cut off towards the inverter circuit 3, from the battery 9. The reverse polarity protection relay switching element 62a protects the inverter circuit 3 from a reverse current from flowing thereto, in a case where the battery 9 is connected with reverse polarity. The power supply relay switching element 61a and the reverse polarity protection relay switching element 62a are provided on the power supply line L1 that connects the battery 9 and the inverter circuit 3. The power supply relay switching element 61a and the reverse polarity protection relay switching element 62a are connected in series. A parasitic diode of the reverse polarity protection relay switching element 62a is connected so as to be reverse of a parasitic diode of the power supply relay switching element 61a. An FET (Field Effect Transistor; Field Effect Transistor) may be adopted as an example of the power supply relay switching element 61a, and the reverse polarity protection relay switching element 62a.

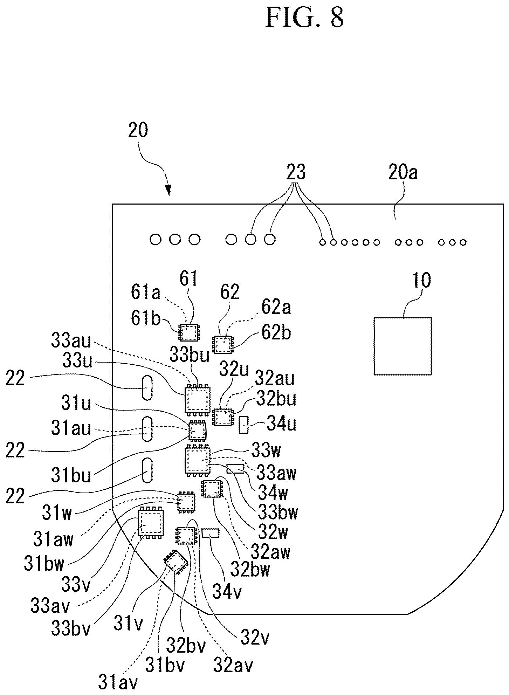

As shown in FIG. 8, a power supply relay semiconductor package 61, and a reverse polarity protection relay semiconductor package 62 are implemented on the first surface 20a of the wiring board 20. The power supply relay semiconductor package 61 has the power supply relay switching element 61a, and a seventh sealing member 61b that surrounds the power supply relay switching element 61a. An outer shape of the power supply relay semiconductor package 61 (the seventh sealing member 61b) as seen in the plan view is rectangular. The seventh sealing member 61b is for example, made of resin. The reverse polarity protection relay semiconductor package 62 has the reverse polarity protection relay switching element 62a, and an eighth sealing member 62b that surrounds the reverse polarity protection relay switching element 62a. An outer appearance of the reverse polarity protection relay semiconductor package 62 (the eighth sealing member 62b) as seen in the plan view is rectangular. The eighth sealing member 62b is for example, made of resin.

In the plan view, an area of the power supply relay semiconductor package 61 is smaller than the area of the third semiconductor package 33u (33v, 33w), and an area of the reverse polarity protection relay semiconductor package 62 is smaller than the area of the third semiconductor package 33u (33v, 33w). With such construction, compared to a case where the area of the power supply relay semiconductor package 61 and the area of the reverse polarity protection relay semiconductor package 62 are equal to the area of the third semiconductor package 33u (33v, 33w), it is possible to reduce implementation areas of the power supply relay semiconductor package 61 and the reverse polarity protection relay semiconductor package 62 on the wiring board 20, and it is possible to downsize the wiring board 20.

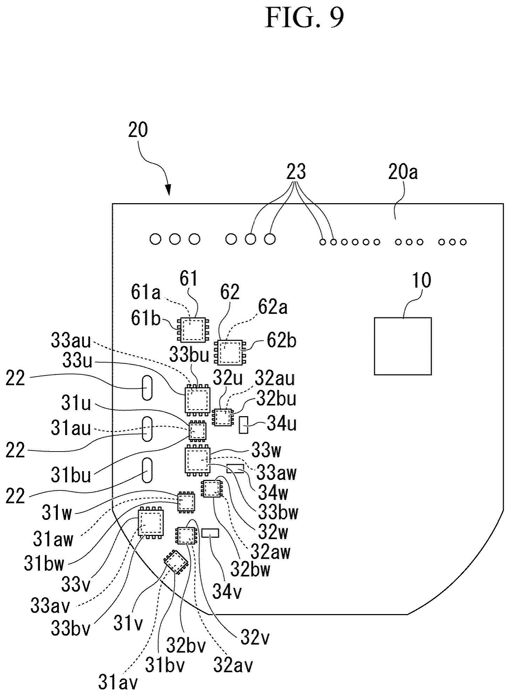

FIG. 9 is a plan view of the wiring board 20 according to a first modification example of the third embodiment.

As shown in FIG. 9, in the plan view, the area of the power supply relay semiconductor package 61 is equal to the area of the third semiconductor package 33u (33v, 33w), and the area of the reverse polarity protection relay semiconductor package 62 is equal to the area of the third semiconductor package 33u (33v, 33w). In such case, it is possible to manufacture the power supply relay semiconductor package 61 and the reverse polarity protection relay semiconductor package 62 on the same manufacturing line, as the third semiconductor package 33u (33v, 33w).

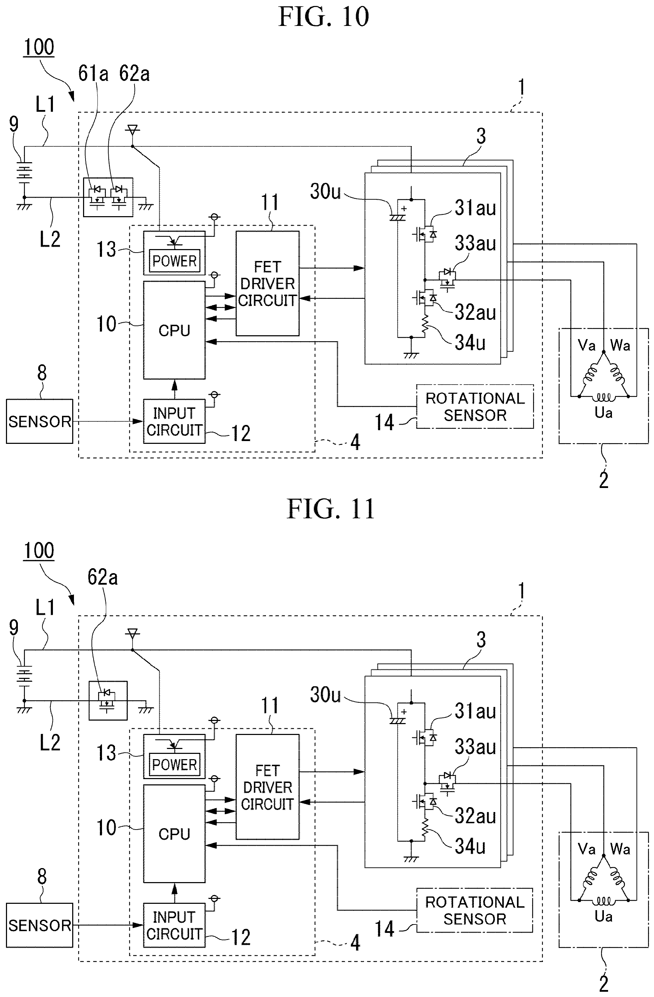

FIG. 10 is a circuit diagram of the electronic control device 1 and the electric power steering device 100 according to a second modification example of the third embodiment.

As shown in FIG. 10, the power supply relay switching element 61a and the reverse polarity protection relay switching element 62a may be provided on the ground line L2 that connects the ground to the inverter circuit 3.

### Fourth Embodiment

Next, an electric power steering device according to a fourth embodiment is explained. A configuration of the electric power steering device according to the present embodiment is fundamentally the same as the electric power steering device explained in the first embodiment, and explanations hereon focus on differing aspects only.

As shown in FIG. 11, the reverse polarity protection relay switching element 62a is further included in the electronic control device 1 according to the present embodiment.

The reverse polarity protection relay switching element 62a protects the inverter circuit 3 from a current in a case where the battery 9 is connected with reverse polarity. The reverse polarity protection relay switching element 62a is provided on the ground line L2 that connects the ground to the inverter circuit 3.

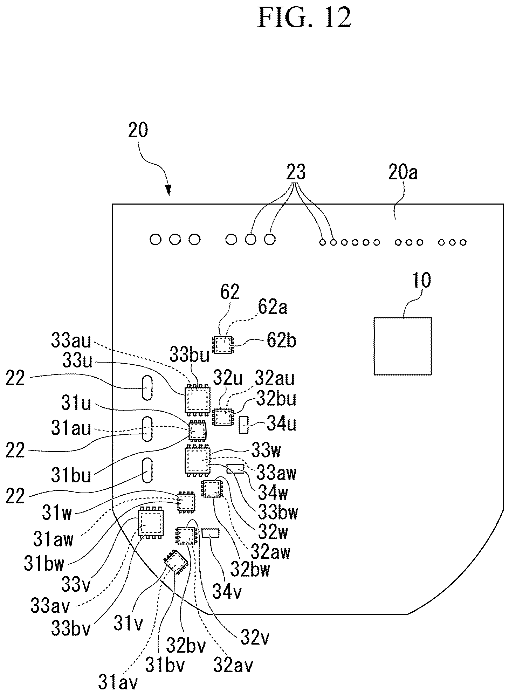

As shown in FIG. 12, the reverse polarity protection relay semiconductor package 62 is implemented on the first surface 20a of the wiring board 20. The reverse polarity protection relay semiconductor package 62 has the reverse polarity protection relay switching element 62a, and the eighth sealing member 62b that surrounds the reverse polarity protection relay switching element 62a. In the plan view, the area of the reverse polarity protection relay semiconductor package 62 is smaller than the area of the third semiconductor package 33u (33v, 33w). With such construction, compared to a case where the area of the reverse polarity protection relay semiconductor package 62 is equal to the area of the third semiconductor package 33u (33v, 33w), it is possible to reduce an implementation area of the reverse polarity protection relay semiconductor package 62 on the wiring board 20, and it is possible to downsize the wiring board 20.

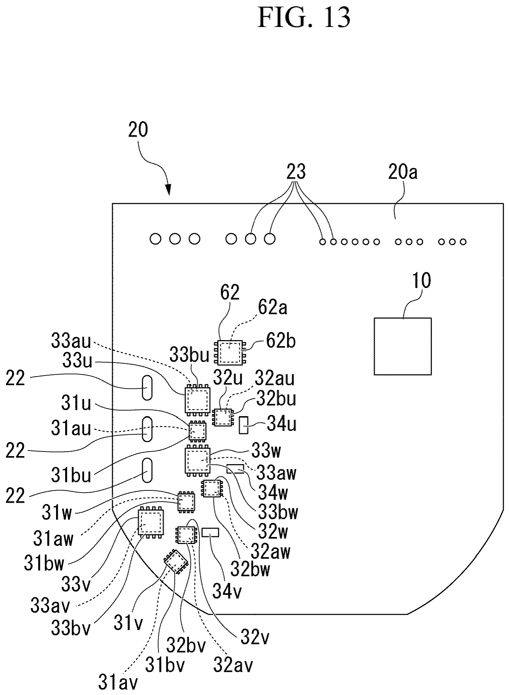

FIG. 13 is a plan view of the wiring board 20 according to a modification example of the fourth embodiment.

As shown in FIG. 13, in the present modification example, the area of the reverse polarity protection relay semiconductor package 62 is the same as the area of the third semiconductor package 33u (33v, 33w). In such case, it is possible to manufacture the reverse polarity protection relay semiconductor package 62 on the same manufacturing line as the third semiconductor package 33u (33v, 33w).

The present disclosure is not limited to the technical scope of the aforementioned embodiments, and various changes may be added so long as the object of the present disclosure is not deviated therefrom.

For example, in the third embodiment, the motor 2 has a pair of three phase windings (three phase coils), and the electronic control device 1 may have the inverter circuit 3 that supplies electric power to the first three phase windings Ua, Va, Wa, and the second inverter circuit 5 that supplies electric power to the second three phase windings Ub, Vb, and Wb. In such case, the inverter circuit 3 and the inverter circuit 5 may commonly use the power supply relay switching element 61a and the reverse polarity protection relay switching element 62a, or use two power supply relay switching element 61a and the reverse polarity protection relay switching element 62a.

In the fourth embodiment, the motor 2 has two three phase windings (three phase coils), and the electronic control device 1 may have the inverter circuit 3 that supplies electric power to the first three phase windings Ua, Va, Wa, and the second inverter circuit 5 that supplies electric power to the second three phase windings Ub, Vb, and Wb. In such case, the inverter circuit 3 and the second inverter circuit 5 may commonly use the reverse polarity protection relay switching element 62a, or use two separate reverse polarity protection relay switching element 62a.

For example, the electronic control device 1 may be used for applications other than those of the electric power steering device 100. The embodiments and/or the modification examples thereof may be appropriately combined as needed.

### Reference Signs List

1... Electronic Control Device, 2...Motor, 3...Inverter Circuit, 4... Control Circuit, 5...Second Inverter Circuit, 9... Battery, 20... Wiring Board, 20a... First Surface, 20b...Second Surface, 24... Thermal Connection Member, 25... Thermal Conductive Member, 31u, 31v, 31w...First Semiconductor Package, 31au, 31av, 31aw...Upper Arm Side Switching Element, 31bu, 31bv, 31bw...First Sealing Member, 32u, 32v, 32w...Second Semiconductor Package, 32au, 32av, 32aw...Lower Arm Side Switching Element, 32bu, 32bv, 32bw...Second Sealing Member, 33u, 33v, 33w... Third Semiconductor Package, 33au, 33av, 33aw...Motor Relay Switching Element, 33bu, 33bv, 33bw... Third Sealing Member, 36u, 36v, 36w...Fourth Semiconductor Package, 36au, 36av, 36aw... Second Upper Arm Side Switching Element, 36bu, 36bv, 36bw...Fourth Sealing Member, 37u, 37v, 37w...Fifth Semiconductor Package, 37au, 37av, 37aw...Second Lower Arm Side Switching Element, 37bu, 37bv, 37bw...Fifth Sealing Member, 38u, 38v, 38w...Sixth Semiconductor Package, 38au, 38av, 38aw...Second Motor Relay Switching Element, 38bu, 38bv, 38bw...Sixth Sealing Member, 40...Motor Main Body, 45...Frame, 46...Housing, 61..Power Supply Relay Semiconductor Package, 61a... Power Supply Switching Element, 61b... Seventh Sealing Member, 62...Reverse Polarity Protection Relay Semiconductor Package, 62a... Reverse Polarity Protection Relay Switching Element, 62b... Eighth Sealing Member, 100...Power Steering Device, L1...Power Supply Line, L2... Ground Line

## Claims

1. An electronic control device that controls a motor, the electronic control device comprising:
a wiring board that has a first surface, and a second surface that is on an opposite side of the first surface;
a first semiconductor package that has an upper arm side switching element, and a first sealing member that surrounds the upper arm side switching element;
a second semiconductor package that has a lower arm side switching element, and a second sealing member that surrounds the lower arm side switching element;
a third semiconductor package that has a motor relay switching element, and a third sealing member that surrounds the motor relay switching element; and
a CPU that controls the upper arm side switching element, the lower arm side switching element, and the motor relay switching element; wherein
the first semiconductor package, the second semiconductor package, and the third semiconductor package are implemented on the first surface of the wiring board,
the upper arm side switching element, the lower arm side switching element, and the motor relay switching element form an inverter circuit that is capable of supplying current to the motor, and
in a plan view seen from a thickness direction of the wiring board, an area of the first semiconductor package is smaller than an area of the third semiconductor package, and an area of the second semiconductor package is smaller than the area of the third semiconductor package.

2. The electronic control device according to claim 1 further comprising:
a fourth semiconductor package that has a second upper arm side switching element, and a fourth sealing member that surrounds the second upper arm side switching element;
a fifth semiconductor package that has the second lower arm side switching element, and a fifth sealing member that surrounds the second lower arm side switching element; and
a sixth semiconductor package that has a second motor relay switching element, and a sixth sealing member that surrounds the second motor relay switching element; wherein
the fourth semiconductor package, the fifth semiconductor package, and the sixth semiconductor package are implemented on the first surface of the wiring board,
the second upper arm side switching element, the second lower arm side switching element, and the second motor relay switching element form a second inverter circuit that is capable of supplying current from a path that is different from a path of the inverter circuit to the motor, and
in the plan view seen from the thickness direction of the wiring board, an area of the fourth semiconductor package is smaller than an area of the sixth semiconductor package, and an area of the fifth semiconductor package is smaller than the area of the sixth semiconductor package.

3. The electronic control device according to claim 1 or 2 further comprising:
a power supply relay semiconductor package which has a power supply relay switching element that switches between current supply and cut off towards the motor from a power source, and a seventh sealing member that surrounds the power supply relay switching element; and
a reverse polarity protection relay semiconductor package, which has a reverse polarity protection relay switching element, and an eighth sealing member that surrounds the reverse polarity protection relay switching element; wherein
the power supply relay semiconductor package and the reverse polarity protection relay semiconductor package are implemented on the first surface of the wiring board, and
in the plan view seen from the thickness direction of the wiring board, an area of the power supply relay semiconductor package is smaller than the area of the third semiconductor package, and an area of the reverse polarity protection relay semiconductor package is smaller than the area of the third semiconductor package.

4. The electronic control device according to claim 1 or 2 further comprising:
a power supply relay semiconductor package which has a power supply relay switching element that switches between current supply and cut off towards the motor from a power source, and a seventh sealing member that surrounds the power supply relay switching element, and
a reverse polarity protection relay semiconductor package, which has a reverse polarity protection relay switching element, and an eighth sealing member that surrounds the reverse polarity protection relay switching element, wherein
the power supply relay semiconductor package and the reverse polarity protection relay semiconductor package are implemented on the first surface of the wiring board, and
in the plan view seen from the thickness direction of the wiring board, an area of the power supply relay semiconductor package is the same as the area of the third semiconductor package, and an area of the reverse polarity protection relay semiconductor package is the same as the area of the third semiconductor package.

5. The electronic control device according to claim 3 or 4, wherein
the power supply relay semiconductor package and the reverse polarity protection relay semiconductor package is provided on a power supply line that connects the power source and the inverter circuit.

6. The electronic control device according to claim 3 or 4, wherein
the power supply relay semiconductor package and the reverse polarity protection relay semiconductor package is provided on a ground line that connects an electrical ground and the inverter circuit.

7. The electronic control device according to claim 1 or 2 further comprising:
a reverse polarity protection relay semiconductor package, which has a reverse polarity protection relay switching element, and an eighth sealing member that surrounds the reverse polarity protection relay switching element, wherein
the reverse polarity protection relay semiconductor package is implemented on the first surface of the wiring board, and the reverse polarity protection relay semiconductor package is provided on a ground line that connects an electrical ground and the inverter circuit, and
in the plan view seen from the thickness direction of the wiring board, an area of the reverse polarity protection relay semiconductor package is smaller than the area of the third semiconductor package.

8. The electronic control device according to claim 1 or 2 further comprising:
a reverse polarity protection relay semiconductor package, which has a reverse polarity protection relay switching element, and an eighth sealing member that surrounds the reverse polarity protection relay switching element, wherein
the reverse polarity protection relay semiconductor package is implemented on the first surface of the wiring board, and the reverse polarity protection relay semiconductor package is provided on a ground line that connects an electrical ground and the inverter circuit, and
in the plan view seen from the thickness direction of the wiring board, an area of the reverse polarity protection relay semiconductor package is the same as the area of the third semiconductor package.

9. An electric power steering device comprising:
the electronic control device according to any one of claims 1 to 8, and
the motor that is controlled by the electronic control device.

10. The electric power steering device according to claim 9, wherein
the motor includes a motor body, a frame having a cylindrical shape and that houses the motor body, and a housing that is fitted on the frame,
the housing is disposed so as to face the second surface of the wiring board,
a thermal connection member that is thermally connected to the wiring board and the housing is provided between the housing and the wiring board, and
a thermal conductive member that is disposed so as to penetrate from the first surface to the second surface is thermally connected to the thermal connection member.
